# EUROPÄISCHE PATENTSCHRIFT

(11) **EP 3 097 281 B1**
(45) Veröffentlichungstag und Bekanntmachung des Hinweises auf die Patenterteilung: **29.05.2019**
(21) Anmeldenummer: 14792446.8
(22) Anmeldetag: 28.10.2014
(51) Int. Cl.: F01L 1/047, F01L 1/14, F01L 1/18, F01L 1/22, F16H 25/10, F01L 13/00

(54) **ÜBERTRAGUNGSANORDNUNG FÜR EINEN MECHANISCH STEUERBAREN VENTILTRIEB SOWIE MECHANISCH STEUERBARER VENTILTRIEB**
TRANSMISSION ASSEMBLY FOR A MECHANICALLY CONTROLLABLE VALVE TRAIN, AND MECHANICALLY CONTROLLABLE VALVE TRAIN
SYSTÈME DE TRANSMISSION DESTINÉ À UN MÉCANISME DE DISTRIBUTION À COMMANDE MÉCANIQUE ET MÉCANISME DE DISTRIBUTION À COMMANDE MÉCANIQUE

(30) Priorität: 23.01.2014 DE 102014100748
(43) Veröffentlichungstag der Anmeldung: 30.11.2016
(73) Patentinhaber: Pierburg GmbH, 41460 Neuss (DE)
(72) Erfinder: SCHMITT, Stephan, 47877 Willich (DE); HAUSHÄLTER, Peter, 41065 Mönchengladbach (DE); ILBERTZ, Markus, 41751 Viersen (DE); SEIBEL, Manuel, 41542 Dormagen (DE)
(74) Vertreter: Patentanwälte ter Smitten Eberlein-Van Hoof Rütten Partnerschaftsgesellschaft mbB
(86) Internationale Anmeldenummer: PCT/EP2014/073044
(87) Internationale Veröffentlichungsnummer: WO 2015/110189

(56) Entgegenhaltungen:
- EP-A1- 1 387 050
- EP-A1- 1 496 211
- EP-A2- 1 143 118
- EP-A2- 1 387 048
- EP-A2- 1 847 691
- DE-A1-102010 048 708
- DE-A1-102012 004 413

## Beschreibung

Die Erfindung betrifft eine Übertragungsanordnung für einen mechanisch steuerbaren Ventiltrieb, die mindestens zwei Übertragungsglieder aufweist, wobei die Übertragungsglieder derart ausgeführt sind, dass sie direkt oder indirekt über Koppelmittel mit jeweils einem Gaswechselventil in Wirkverbindung stehen und wobei die Übertragungsglieder in einem Kulissenmodul mittels Lagerorganen in einer Kulissenanordnung beweglich gelagert sind, wobei die Übertragungsglieder des Weiteren über Nockenfolgerollorgane mit einer Nockenwelle in Wirkverbindung stehen und wobei eine Ventilhubverstelleinrichtung zur Einstellung von verschiedenen Maximalhüben des jeweiligen Gaswechselventils vorgesehen ist, wobei mindestens ein Lagerorgan und zwei Nockenfolgerollorgane auf einer durchgehenden Drehachse gelagert sind. Des Weiteren betrifft die Erfindung einen mechanisch steuerbaren Ventiltrieb mit einer derartigen Übertragungsanordnung.

Grundsätzlich sind Übertragungsanordnungen aus dem druckschriftlichen Stand der Technik, wie zum Beispiel der EP 1 143 118 A2, der EP 1 387 048 A2, der EP 1 847 691 A2, der EP 1 496 211 A1, der DE 10 2010 048 708 A1 und der DE 10 2012 004 413 A1 bekannt. Hierbei wird jedes einzelne Übertragungsglied auch einzeln im Zylinderkopf gelagert.

Eine beispielhafte, gattungsgemäße Übertragungsanordnung für das System "UniValve" ist aus der DE 10 2007 022 266 A1 bekannt. Hierbei weist die Übertragungsanordnung zwei Übertragungsglieder auf, die jeweils auf bekannte Weise auf ein Gaswechselventil einwirken. Hierzu ist ein oberes Nockenfolgerollorgan jeweils durch eine Nockenwelle antreibbar, so dass das Gaswechselventil zwischen einem voreingestellten Maximalhub und einem Minimalhub oder auch Nullhub geöffnet bzw. geschlossen wird. Der jeweilige Maximalhub ist hierbei durch eine Ventilhubverstelleinrichtung einstellbar, die ihrerseits hierzu auf das jeweilige Übertragungsglied einwirkt. In der DE 10 2007 022 266 A1 ist die Ventilhubverstelleinrichtung als Exzenterwelle ausgebildet. Die Übertragungsanordnung ist hierbei über ein in einer Kulissenbahn abrollendes Lagerorgan im Zylinderkopf beweglich gelagert. Dieses Lagerorgan ist dabei auf einer Achse angeordnet, auf der auch die Nockenfolgerollorgane vorgesehen sind. Es hat sich nun herausgestellt, dass diese Achse sich in Folge von Ventilfederkräften, die auf die jeweiligen Übertragungsglieder einwirken, durchbiegen kann, wodurch es zu einem erhöhten Verschleiß der Übertragungsanordnung kommen kann. Gleichzeitig führt eine derartige Situation dazu, dass in bestimmten Lastsituationen das Lagerorgan als Widerlager wirkt und dementsprechend die Effizienz der Brennkraftmaschine verringert wird, was zu erhöhten Kraftstoffverbrauch führt. Ein ähnlich aufgebautes System ist aus der EP 1 387 050 A1 bekannt.

Aufgabe der Erfindung ist es daher, die oben genannten Nachteile auf einfache und kostengünstige Weise zu vermeiden sowie bei der Realisierung der maximalen Potentiale zu helfen.

Diese Aufgabe wird dadurch gelöst, dass einem Nockenfolgerollorgan jeweils zwei Lagerorgane gemeinsam zugeordnet sind, derart, dass ein Durchbiegen der Drehachse verhindert werden kann. Hierdurch wird die Steifigkeit des Gesamtsystems des Ventiltriebs, die eine grundlegende Voraussetzung für die Ventiltriebsdynamik, die Drehzahlfestigkeit und die maximal darstellbaren Ventilbeschleunigung und damit das Potenzial zur Optimierung des Verbrennungsmotors hinsichtlich Leistungs- und Verbrauchsverhalten darstellt, verbessert. Weiterhin ist eine Optimierung des Kraftstoffverbrauches durch höhere Öffnungs-und Schließbeschleunigungen möglich. Daraus ergeben sich auf bekannte Weise eine Optimierung der CO2-Emissionen sowie eine Leistungs-und Drehmomentsteigerung der Brennkraftmaschine. In vorteilhafter Weise weisen die äußeren Kulissenbahnen an der jeweiligen Außenseite gelegene Führungskanten auf, wodurch eine Aufnahme von auf die Drehachse wirkenden Axialkräfte möglich ist.

In vorteilhafter Weise sind alle Lagerorgane in Reihe aufeinanderfolgend angeordnet. Alternativ können die äußeren Lagerorgane oberhalb der Nockenfolgerollorgane verlaufen bei umgestaltetem Übertragungsglied.

Die Aufgabe wird weiterhin gelöst durch einen mechanisch steuerbaren Ventiltrieb mit einer derartigen Übertragungsanordnung, wobei mindestens zwei in Reihe angeordneten Gaswechselventilen eine Übertragungsanordnung zugeordnet ist.

Die Erfindung wird nachfolgend anhand einer Zeichnung näher erläutert, hierbei zeigt:
Figur 1 eine perspektivische Darstellung eines erfinderischen mechanisch steuerbaren Ventiltriebs,
Figur 2 eine Schnittansicht einer ersten Ausführungsform einer erfinderischen Übertragungsanordnung,
Figur 3 eine perspektivische Ansicht von Kulissenbahnen aus Figur 2, und
Figur 4 eine Schnittansicht einer zweiten Ausführungsform einer erfinderischen Übertragungsanordnung.

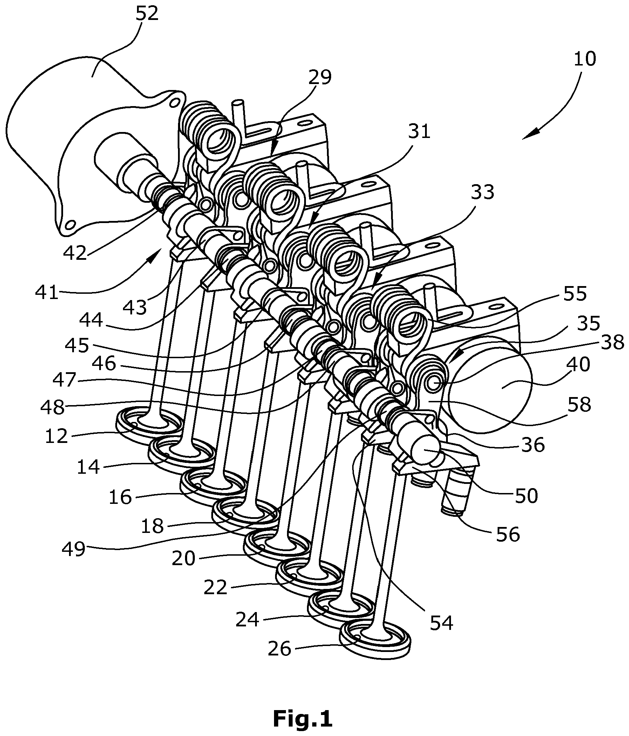

Figur 1 zeigt eine perspektivische Ansicht eines mechanisch steuerbaren Ventiltriebs 10 mit mehreren in Reihe angeordneten Gaswechselventilen 12, 14, 16, 18, 20, 22, 24 und 26. Im vorliegenden Ausführungsbeispiel sind jeweils zwei Einlaßgaswechselventile einem Zylinder der Brennkraftmaschine zugeordnet. Der mechanisch steuerbare Ventiltrieb 10 weist im vorliegenden Fall vier Übertragungsanordnungen 29, 31, 33 und 35 auf, denen jeweils zwei Gaswechselventile 12, 14; 16, 18; 20, 22; und 24, 26 zugeordnet sind. In der vorliegenden Ansicht ist für die Übertragungsanordnung 35 exemplarisch ein Lagerorgan 36 dargestellt, mit dem eine Drehachse 38 der Übertragungsanordnung 35 in einer in dieser Ansicht nicht weiter dargestellten Kulissenbahn auf bekannte Weise abrollt. Darüber hinaus stehen die Übertragungsanordnungen 29, 31, 33 und 35 auf bekannte Weise mit einer Nockenwelle 40 in Wirkverbindung. Außerdem ist jede Übertragungsanordnung 29, 31, 33 und 35 durch Verstellorgane 42, 43; 44, 45; 46, 47 und 48, 49 einer Ventilhubverstelleinrichtung 41 derart ansteuerbar, dass ein geringerer oder höherer Maximalhub der Gaswechselventile 12, 14; 16, 18; 20, 22; 24, 26 einstellbar ist. Im vorliegenden Ausführungsbeispiel sind die Verstellorgane 42, 43, 44, 45, 46, 47 und 48, 49 jeweils den Einlassventilen 12, 14; 16, 18; 20, 22 und 24, 26 zugeordnet und als Exzenterorgane ausgeführt, die auf einer Exzenterwelle 50 vorgesehen sind und auf nicht weiter dargestellte Angriffsorgane auf bekannte Weise einwirken. Die Exzenterwelle 50 ist im vorliegenden Ausführungsbeispiel durch ein Antriebsorgan 52 auf bekannte Weise antreibbar. Die Übertragungsanordnung 35 wirkt im vorliegenden Fall auf Schwenkhebelanordnungen 54 und 56 ein, wobei ein dargestelltes Übertragungsglied 58 mittels einer Arbeitskurve in Wirkverbindung mit der Schwenkhebelanordnung 56 steht und wobei die Schwenkhebelanordnung 56 mit einer Stirnfläche auf das Gaswechselventil 26 angreift. In Folge von Ventilfederkräften kann es in bestimmten Lastsituationen zu einer Durchbiegung der Drehachse 38 mit den verbundenen Nachteilen kommen.

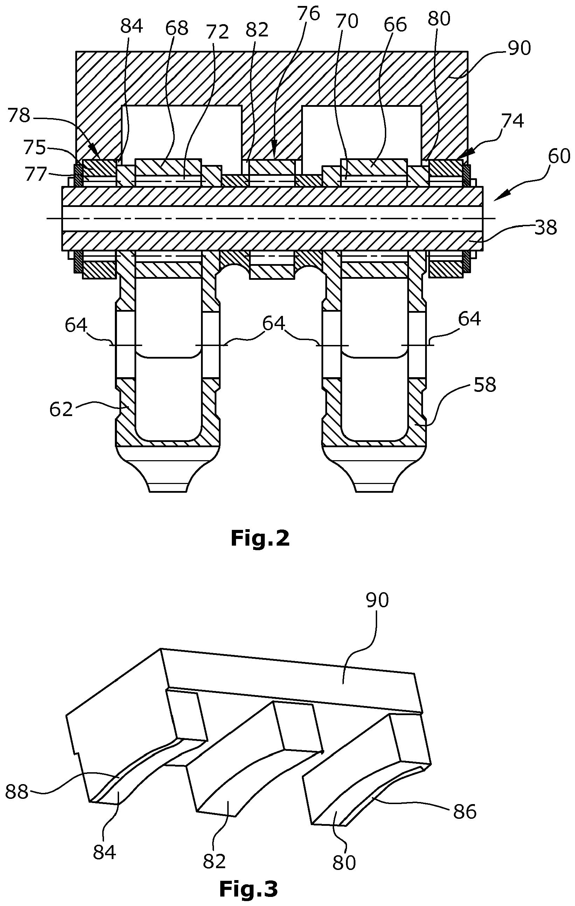

Figur 2 zeigt nun eine erfindungsgemäße Übertragungsanordnung 60, die die in Figur 1 gezeigten Übertragungsanordnungen 29, 31, 33 und 35 ersetzen kann. Die Übertragungsanordnung 60 weist im vorliegenden Fall das aus Figur 1 bekannte Übertragungsglied 58 und ein zweites Übertragungsglied 62 auf, das über eine Schwenkhebelanordnung 56 in Wirkverbindung mit dem Gaswechselventil 24 aus Figur 1 steht. Auf Drehachsen 64 sind auf bekannte Weise nicht weiter dargestellte Verstellorgane gelagert, die mit der Exzenterwelle 50 aus Figur 1 zusammenwirken. Beide Übertragungsglieder 58, 62 sind auf der Drehachse 38 angeordnet, wobei jedes Übertragungsglied 58, 62 ein Nockenfolgerollorgan 66, 68 aufweist, die jeweils mittels Nadellager 70, 72 auf der Drehachse 38 gelagert sind und durch die Nockenwelle 40 antreibbar sind. Des Weiteren weist die Übertragungsanordnung 60 drei Lagerorgane 74, 76 und 78 auf, die ebenfalls aus einer Rolle 75 und einem Nadellager 77 bestehen und über die die Übertragungsanordnung 60 in entsprechenden Kulissenbahnen 80, 82 und 84 abrollt. Die Kulissenbahnen 80, 82 und 84 sind in einem Kulissenmodul 90 kombiniert vorgesehen. Hierdurch wird die effektive Steifigkeit der Drehachse 38 wesentlich erhöht. Das Kulissenmodul 90 ist hierbei auf bekannte Weise in einem nicht weiter dargestellten Zylinderkopf vorgesehen.

Die beiden äußeren Kulissen 80, 84 können entsprechend der Kraftaufteilung und des verfügbaren Bauraums in bedarfsgerechter Breite ausgeführt sein. Weiterhin, siehe hierzu insbesondere Figur 3, können die äußeren Kulissenbahnen 80, 84 an der jeweiligen Außenseite Führungskanten 86, 88 aufweisen, die eine axiale Führung des Übertragungsmoduls 60 gewährleisten.

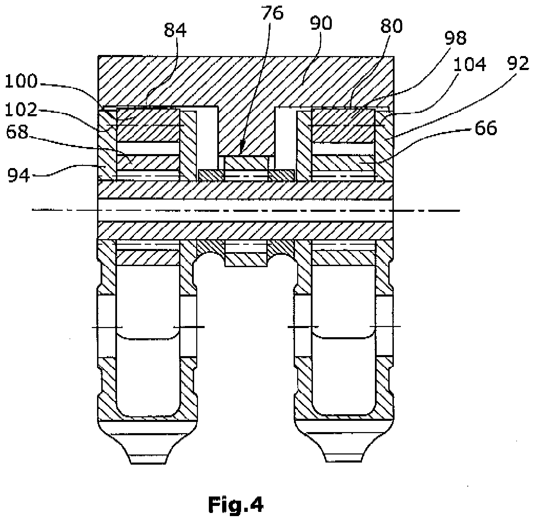

Figur 4 zeigt nun eine Schnittansicht einer zweiten Ausführungsform einer erfinderischen Übertragungsanordnung, die den Vorteil eines geringeren benötigten Bauraumes aufweist. Hierzu sind Übertragungsglieder 92, 94 an dem zum Kulissenmodul 90 gerichteten Seite verlängert ausgebildet, wodurch es möglich ist, oberhalb der Nockenfolgerollorgane 66, 68 Lagerorgane 98, 100 auf einer Drehachse 102, 104 anzuordnen, die wiederum auf Kulissenbahnen 80, 84 abrollen.

## Patentansprüche

1. Übertragungsanordnung für einen mechanisch steuerbaren Ventiltrieb, (10) die mindestens zwei Übertragungsglieder (58, 62) aufweist, wobei die Übertragungsglieder (58, 62) derart ausgeführt sind, dass sie direkt oder indirekt über Koppelmittel (54, 56) mit jeweils einem Gaswechselventil (24, 26) in Wirkverbindung stehen und wobei die Übertragungsglieder (58, 62) in einem Kulissenmodul (90) mittels Lagerorganen (74, 76, 78) in einer Kulissenanordnung (80, 82, 84) gelagert sind, wobei die Übertragungsglieder (58, 62) des Weiteren über Nockenfolgerollorgane (66, 68) mit einer Nockenwelle (40) in Wirkverbindung stehen und wobei eine Ventilhubverstelleinrichtung zur Einstellung von verschiedenen Maximalhüben des jeweiligen Gaswechselventils (24, 26) vorgesehen ist, wobei mindestens ein Lagerorgan (74, 76, 78, 98, 100) und zwei Nockenfolgerollorgane (66, 68) auf einer durchgehenden Drehachse (38) gelagert sind, **dadurch gekennzeichnet, dass** einem Nockenfolgerollorgan (66, 68) jeweils zwei Lagerorgane (74, 76, 78, 98, 100) gemeinsam zugeordnet sind, derart, dass ein Durchbiegen der Drehachse (38) verhindert werden kann.

2. Übertragungsanordnung nach Anspruch 1, **dadurch gekennzeichnet, dass** die äußeren Kulissenbahnen (80, 84) an der jeweiligen Außenseite gelegene Führungskanten (86, 88) aufweisen.

3. Übertragungsanordnung nach Anspruch 1 oder 2, **dadurch gekennzeichnet, dass** alle Lagerorgane (74, 76, 78) in Reihe aufeinanderfolgend angeordnet sind.

4. Übertragungsanordnung nach Anspruch 1 oder 2, **dadurch gekennzeichnet, dass** die äußeren Lagerorgane (98, 100) oberhalb der Nockenfolgerollorgane (66, 68) verlaufen.

5. Mechanisch steuerbarer Ventiltrieb mit einer Übertragungsanordnung nach einem der Ansprüche 1 - 4, **dadurch gekennzeichnet, dass** mindestens zwei in Reihe angeordneten Gaswechselventilen (24, 26) eine Übertragungsanordnung (60, 90) zugeordnet ist.

## Claims

1. A transmission assembly for a mechanically controllable valve train (10), having at least two transmission elements (58,62), wherein the transmission elements (58, 62) are designed in such a manner that they are each, directly or indirectly via coupling means (54, 56), in operative connection with a respective gas exchange valve (24, 26), and wherein the transmission elements (58, 62) are mounted in a slotted guide module (90) by means of mounting members (74, 76, 78) in a slotted guide system (80, 82, 84) and said transmission elements (58, 62) are also in operative connection with a camshaft (40) via cam following roller elements (66, 68), and wherein a valve stroke adjustment device for setting different maximum strokes of the respective gas exchange valve (24, 26) is provided, wherein at least one mounting member (74, 76, 78, 98, 100) and cam following roller elements (66, 68) are mounted on a rotary axis (38),
**characterized in that** a cam following roller element (66, 68) has assigned to it respectively two mounting members (74, 76, 78, 98, 100) in such a manner that the rigidity of the rotary axis (38) is increased.

2. The transmission assembly according to claim 1, **characterized in that** the outer slotted guide tracks (80, 84) comprise guide edges (86, 88) arranged at the respective outer side.

3. The transmission assembly according to claim 1 or 2, **characterized in that** all of the mounting members (74, 76, 78) are arranged serially in a row.

4. The transmission assembly according to claim 1 or 2, **characterized in that** the outer mounting members (98, 100) extend above the cam following roller elements (66, 68).

5. A mechanically controllable valve train comprising a transmission assembly according to any one of claims 1 - 4, **characterized in** at least two serially arranged gas exchange valves (24, 26) have a transmission assembly (60, 90) assigned to them.

## Revendications

1. Système de transmission destiné à un mécanisme de distribution (10) à commande mécanique, comprenant au moins deux éléments de transmission (58, 62), les éléments de transmission (58, 62) étant conçus de sorte qu'ils soient respectivement en liaison fonctionnelle directe ou indirecte avec une vanne d'échange de gaz (24, 26) par des moyens de couplage (54, 56), et les éléments de transmission (58, 62) étant supportés dans un module de coulisse (90) par des organes de support (74, 76, 78) dans une dispositif de coulisse (80, 82, 84), les éléments de transmission (58, 62) étant, en outre, en liaison fonctionnelle avec un arbre à came (40) par des organes suiveur de came à rouleau (66, 68), et un moyen de réglage de la levée de soupape est prévu pour ajuster différente levées maximales de la vanne d'échange de gaz (24, 26) respective, au moins un organe de support (74, 76, 78, 98, 100) et deux organes suiveur de came à rouleau (66, 68) sont supportés sur un axe de rotation (38) continu, **caractérisé en ce que** deux organes de support (74, 76, 78, 98, 100) sont associés de façon commune à un organe suiveur de came à rouleau (66, 68), respectivement, de sorte que l'axe de rotation (38) peut être empêché de fléchir.

2. Système de transmission selon la revendication 1, **caractérisé en ce que** les chemins de coulisse (80, 84) extérieur présentent des bords de guidage (86, 88) situés au côté extérieur respectif.

3. Système de transmission selon la revendication 1 ou 2, **caractérisé en ce que** tous les organes de support (74, 76, 78) sont disposés en série l'un après l'autre.

4. Système de transmission selon la revendication 1 ou 2, **caractérisé en ce que** les organes de support (98, 100) extérieurs s'étendent au-dessus des organes suiveur de came à rouleau (66, 68).

5. Système de transmission selon l'une quelconque des revendications 1 - 4, **caractérisé en ce qu'**un système de transmission (60, 90) est associé à au moins deux vannes d'échange de gaz (24, 26) disposées en série.
